(19) **Europäisches Patentamt / European Patent Office / Office européen des brevets**

(11) **EP 2 681 043 B1**

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(51) Int Cl.:
**B32B 3/26** (2006.01)   **B42D 15/00** (2006.01)

(21) Anmeldenummer: **12707528.1**

(22) Anmeldetag: **01.03.2012**

(86) Internationale Anmeldenummer:
**PCT/EP2012/053512**

(87) Internationale Veröffentlichungsnummer:
**WO 2012/117054 (07.09.2012 Gazette 2012/36)**

(54) **VERBUNDKÖRPER UND VERFAHREN ZUR HERSTELLUNG EINES VERBUNDKÖRPERS MIT EINEM INNENLIEGENDEN MODIFIZIERTEN VOLUMENBEREICH**

COMPOSITE BODY AND METHOD FOR PRODUCING A COMPOSITE BODY HAVING AN INTERNAL MODIFIED VOLUME REGION

CORPS COMPOSITE ET PROCÉDÉ DE PRODUCTION D'UN CORPS COMPOSITE PRÉSENTANT UNE ZONE VOLUMIQUE MODIFIÉE SITUÉE À L'INTÉRIEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2011 DE 102011004934**

(43) Veröffentlichungstag der Anmeldung:
**08.01.2014 Patentblatt 2014/02**

(73) Patentinhaber: **Bundesdruckerei GmbH**
**10969 Berlin (DE)**

(72) Erfinder:
• **KULIKOVSKA, Olga**
  **14165 Berlin (DE)**
• **FISCHER, Jörg**
  **13053 Berlin (DE)**
• **PAESCHKE, Manfred**
  **16348 Wandlitz (DE)**
• **TRÖLENBERG, Stefan**
  **15749 Mittenwalde OT Ragow (DE)**
• **MATHEA, Arthur**
  **14199 Berlin (DE)**
• **PEINZE, Franziska**
  **12587 Berlin (DE)**

(74) Vertreter: **Obst, Bernhard**
**Patentanwälte Bressel und Partner mbB**
**Postdamer Platz 10**
**10785 Berlin (DE)**

(56) Entgegenhaltungen:
**DE-B3-102008 053 582**

EP 2 681 043 B1

**Beschreibung**

Die Erfindung betrifft einen Verbundkörper, der aus thermoplastischen Substratschichten hergestellt ist, sowie ein Verfahren zu dessen Herstellung. Insbesondere betrifft die Erfindung die Herstellung von Verbundkörpern sowie solche Verbundkörper, die als Wert- und/oder Sicherheitsdokumenten eingesetzt werden und in die einzelne oder mehrere Sicherheitsmerkmale und/oder Sicherheitselemente integriert sind oder die als Basis für ein Wert- und/oder Sicherheitsdokument dienen.

Moderne Wert- und/oder Sicherheitsdokumente, insbesondere kartenförmige Wert- und/oder Sicherheitsdokumente, werden häufig auf Basis von Verbundkörpern hergestellt, die auf Basis eines oder mehrerer Polymere hergestellt sind. Als Sicherheitsdokumente werden Dokumente bezeichnet, welche mindestens ein Sicherheitsmerkmal, in der Regel eine Vielzahl unterschiedlicher Sicherheitsmerkmale, aufweisen. Als Sicherheitsmerkmale werden solche Merkmale bezeichnet, die ein Nachahmen, Verfälschen und/oder Duplizieren eines Dokuments erschweren oder unmöglich machen.

Da Sicherheitsdokumente häufig einzelne Sicherheitsmerkmale umfassen, die nur schwer herzustellen sind, werden Sicherheitsdokumente häufig verfälscht. Dies bedeutet, dass an einem echten und autorisiert hergestellten Sicherheitsdokument Manipulationen vorgenommen werden, indem beispielsweise einzelne in dem Dokument gespeicherte Informationen verändert werden. Bei Sicherheitsdokumenten, die beispielsweise einer Person zugeordnet sind, wie Reisepässen, Personalweisen, Führerscheinen, Identifikationskarten oder Ähnlichen, werden hierbei beispielsweise eine Person identifizierende Daten ausgetauscht und/oder modifiziert. Um solche Manipulationen zu erschweren, wird versucht, Sicherheitsmerkmale im Innern des Sicherheitsdokuments anzuordnen, um einen Zugriff auf diese Sicherheitsmerkmale zu erschweren.

Aus der DE 10 2008 053 582 B3 ist ein tragbarer Datenträger bekannt, in den ein Sicherheitsmerkmal durch Einbringen von Aussparungen, Befüllen der Aussparungen mit transluzentem Material und Aushärten des transluzenten Materials bekannt ist, wobei das transluzente Material Bestandteile enthält, die durch UV- und/oder IR-Bestrahlung zur Lumineszenz anregbar sind. Hierdurch wird ein Sicherheitsmerkmal in einer Oberflächenschicht geschaffen, welches optisch wahrnehmbar ist. Ferner ist es beschrieben, den Datenträger mit einer so genannten Overlayfolie als äußeren Schutz zu überziehen.

Auch aus der DE 199 34 434 A1 ist ein Wert- und Sicherheitsdokument mit Perforierungen bekannt, bei denen Mikrokanäle als zusätzlicher Sicherheits- und Echtheitsnachweis angeordnet werden. Es sind Ausführungsformen beschrieben, bei denen Mikrokanäle unter unterschiedlichen Winkeln bezüglich einer Oberflächennormale der Schichten eingebracht werden, aus denen das Sicherheitsdokument gebildete wird. Hierdurch soll erreicht werden, dass aus unterschiedlichen Betrachtungsrichtungen jeweils nur die Kanäle der Perforierungen zu sehen sind, deren Kanalachsen im Wesentlichen mit einer Betrachtungsrichtung fluchten. In der DE 199 34 434 A1 ist ferner beschrieben, die erzeugten Kanäle zu verfüllen, um sie gegen Verschmutzungen zu schützen. Andere Ausführungsformen sehen vor, dass die Mikrokanäle mit fluoreszierenden oder lumineszierenden Stoffen befüllt und gegebenenfalls durch Schutzfolien abgedeckt werden, um hierdurch weitere optisch erfassbare Effekte zu erzeugen.

Aus dem Stand der Technik ist es somit bekannt, durch das Einbringen von Kanälen in ein Substrat die Materialeigenschaften des Substrats in optischer Hinsicht zu verändern und hierüber optisch verifizierbare Informationen in einem Wert- und/oder Sicherheitsdokument zu speichern.

Grundsätzlich ist es wünschenswert, auch Sicherheitsmerkmale in Sicherheitsdokumenten auszubilden, die nicht für eine optische Verifikation vorgesehen sind. So werden beispielsweise elektronische Strukturen, beispielsweise Mikrochips und Antennen für deren kontaktloses Auslesen und/oder für deren Energieversorgung in moderne Sicherheitsdokumente integriert.

Allgemein ist es für die Herstellung einiger Sicherheitsmerkmale wünschenswert, die Volumeneigenschaften im Innern des Sicherheitsdokuments gezielt beeinflussen zu können. Bei aus mehreren Substratschichten hergestellten Verbundkörpern ist es aus dem Stand der Technik bekannt, dass ein Einbringen und Einbinden unterschiedlicher Materialen häufig dazu führt, dass die Gesamtstabilität, insbesondere hinsichtlich einer Delamination, d.h. einem Auftrennen in die ursprünglichen Schichten, aus denen der Verbundkörper ursprünglich gebildet wurde, beeinträchtigt wird. Dies ist grundsätzlich nachteilig, da im Falle einer Delaminationsmöglichkeit ein Zugang zu im Innern angeordneten Sicherheitsmerkmalen und Sicherheitselementen erleichtert wird und somit Fälschungsmöglichkeiten Vorschub geleistet wird.

Der Erfindung liegt somit die technische Aufgabe zugrunde, einen verbesserten Verbundkörper für Sicherheits- und/oder Wertdokumente sowie ein Verfahren zu deren Herstellung zu schaffen, welche eine Ausbildung neuartiger und/oder verbesserter Sicherheitselemente und -merkmale im Innern von Verbundkörpern gestatten.

Grundidee der Erfindung

Der Erfindung liegt der Gedanke zugrunde, einen Verbundkörper zu schaffen, der aus mehreren Substratschichten hergestellt wird, und in einem innenliegenden Volumenbereich die Materialeigenschaften so zu verändern, dass hierdurch nicht nur optisch auslesbare Veränderungen in einem Volumenbereich geschaffen werden, die als Sicherheitselement verwendet werden können oder die die Ausbildung anderer Sicherheitsmerkmale unterstützen oder begünstigen. Hierzu ist vorgesehen, in mindestens eine der mehrere Substratschichten Ausnehmungen oder Durchbrechungen einzubringen und diese zumindest teilweise, vorzugsweise alle, mit einem Füllmaterial oder unterschiedlichen Füllmaterialien vorzugsweise vollständig zu verfüllen, wobei das Füllmaterial oder die Füllmaterialien eine abweichende Materialeigenschaft von dem Basismaterial aufweisen, aus dem diese eine der mehreren Substratschichten hergestellt ist. Anschließend wird diese mit den verfüllten Ausnehmungen und/oder Durchbrechungen versehene Substratschicht mit weiteren Substratschichten zusammengeführt und in einem Hochdruck-Hochtemperatur-Laminationsverfahren zu einem monolithischen Verbundkörper zusammengefügt. Entscheidend ist hierfür, dass alle miteinander laminierten Substratschichten auf Basis desselben thermoplastischen Polymermaterials hergestellt sind, so dass sich ein monolithischer Verbundkörper ausbildet. Als monolithisch wird ein Verbundkörper hier angesehen, wenn in dem fertigen Verbundkörper hinsichtlich der Polymerstruktur kein Phasenübergang an den ursprünglichen Grenzflächen nachweisbar ist, an denen die Substratschichten, aus denen der Verbundkörper hergestellt ist, vor dem Laminieren aneinander gefügt wurden. Hierdurch wird eine Delamination quasi unmöglich gemacht. Es gibt keine bevorzugte Delaminationsebene aufgrund des Polymermaterials.

Definitionen

Als monolithisch wird ein Verbundkörper, welcher aus unterschiedlichen Substratschichten hergestellt ist, bzw. ein Verbundkörper, der unterschiedliche Materialschichten aufweist, angesehen, bei dem die sich ergebende Polymerstruktur zwischen den ursprünglichen Substratschichten bzw. den Materialschichten im fertigen Verbundkörper keinen Phasenübergang hinsichtlich der Polymerstruktur aufweist. Dies bedeutet, dass eine Umordnung der Polymerstruktur über die ursprüngliche Substratschichtgrenze hinweg so erfolgt, dass diese Schichtgrenze anschließend aufgrund der Polymerstruktur nicht mehr zu erkennen ist. Es wird an dieser Stelle angemerkt, dass in dem fertigen Verbundkörper dennoch unterschiedliche Materialschichten identifizierbar sein können, da beispielsweise eine opake Materialschicht, welche aus einer ursprünglich opaken Substratschicht hervorgegangen ist, Zusatzstoffe, welche in die Polymermatrix eingebunden sind, umfasst, die die optischen Eigenschaften in dieser Materialschicht gegenüber einer transparenten Materialschicht verändern. Dennoch ist der durch das Polymermaterial gebildete Dokumentkörper hinsichtlich seiner mechanischen Stabilität, insbesondere gegenüber einer Delamination bzw. Trennbarkeit der einzelnen Materialschichten, als ein einheitlicher, im Wesentlichen homogener Körper anzusehen, der aus einer transparenten und einer opaken Substratschicht zu einem monolithischen Verbundkörper gefügt ist.

Als eben wird eine Oberfläche angesehen, welche flach ist und durch eine nicht gekrümmte Fläche in einem kartesischen Raum approximiert werden kann. Eine Oberfläche wird als eben im Bereich darunter liegender Mikroperforation angesehen, wenn Abweichungen gegenüber einer flachen, nicht gekrümmten kartesischen Ebene in einem Flächengebiet, unterhalb dessen in einer Materialschicht Mikroperforationen angeordnet sind, in derselben Größenordnung liegen, wie die bei einem gleichartig hergestellten Verbundkörper auftretenden Abweichungen, der keine Mikroperforationen in einer darunter liegenden Materialschicht aufweist.

Als Sicherheitsmerkmal wird jedes Merkmal bezeichnet, welches eine Nachahmung, Verfälschung, Manipulation oder Ähnliches eines Gegenstands unmöglich macht oder erschwert.

Als Sicherheitsdokument wird jedes Dokument bezeichnet, welches mindestens ein Sicherheitsmerkmal, in der Regel eine Vielzahl unterschiedlicher Sicherheitsmerkmale, umfasst. Sicherheitsdokumente umfassen beispielsweise ID-Dokumente, Reisepässe, Personalausweise, Identifikationskarten, Führerscheine, Fahrzeugscheine, Fahrzeugbriefe, Zugangsberechtigungskarten, Firmenausweise, Zutrittskarten, Bankkarten, Kreditkarten, Visa, aber auch gegen eine Fälschung gesicherte Etiketten, Eintrittskarten, Banknoten, Postwertzeichen, Wertpapiere oder Ähnliches. Solche Sicherheitsdokumente, die einen Wert verkörpern, wie beispielsweise Postwertzeichen, Wertpapiere oder Banknoten, werden auch als Wertdokumente bezeichnet. Eine Abgrenzung zwischen Wert- und Sicherheitsdokumenten ist nicht in jedem Fall eindeutig möglich und im Hinblick auf den Erfindungsgegenstand auch nicht wesentlich. Im Sinne der hier beschriebenen Gegenstände werden Wertdokumente auch immer als Sicherheitsdokumente aufgefasst.

Als Substratschicht wird hier jeweils eine selbsttragende flache Entität verstanden. Flach bedeutet in diesem Zusammenhang, dass eine Materialstärke der Substratschicht senkrecht zu einer flächigen Ausdehnung einer Ober- und einer Unterseite, welche im Wesentlichen parallel zueinander orientiert sind, wesentlich kleiner als die Kantenlängen dieser Ober- und Unterseite ist. Eine Substratschicht kann insbesondere in Form einer Folie bereitgestellt werden, die als Bogen oder Endlosmaterial von einer Rolle vorliegen kann. Im Regelfall weist eine Substratschicht senkrecht zu den Hauptflächen an allen Orten parallel zur Oberflächennormalen gemessen eine einheitliche Materialstärke auf.

Eine Volumenschicht ist eine eine endliche Schichtstärke aufweisende Schicht eines Gegenstandes, insbesondere eines Verbundkörpers.

Als Materialschicht wird eine Volumenschicht in einem Verbundkörper angesehen, die eine im Wesentlichen homogene Beschaffenheit hinsichtlich ihres thermoplastischen Grundmaterials aufweist.

Durch Farbzusammensetzungen erzeugte Drucklagen werden nicht als Materialschichten angesehen.

Unter thermoplastischen Polymermaterialien werden solche Materialien verstanden, die in einem bestimmten Temperaturbereich plastisch verformbar sind. Beispiele für thermoplastische Polymermaterialien sind Polyethylenterephthalate (PET), Polyethylennaphthalate (PEN), Polyvinylchlorid (PVC), Acrylnitril-Butadien-Styrol (ABS), Polyamide (PA), Polyazetat (PLA), Polymethylmethacrylat (PMMA), Polycarbonat (PC), Polyethylen (PE), Polypropylen (PP), Polystyrol (PS), Polyetheretherketon (PEEK), um die Wichtigsten aufzuzählen. Ebenso können thermoplastische Elastomere (TPE), insbesondere thermoplastisches Polyurethan (TPO), als thermoplastische Werkstoffe zur Herstellung eines Verbundkörpers genutzt werden.

Ein thermoplastisches Grundmaterial umfasst ein thermoplastisches Polymer, welches gegebenenfalls Zusatzstoffe (beispielsweise Nanopartikel und/oder Mikropartikel und/oder Farbmittel) umfasst, die für eine Färbung etc. sorgen und die homogen in dem Polymermaterial verfüllt sind.

Ausnehmungen sind Hohlvolumina in einer Substratschicht, die diese nicht vollständig durchdringen. Durchbrechungen sind Hohlvolumina, die durch ein Substrat eine Verbindung zwischen zwei gegenüberliegenden Oberflächen bilden.

Als Mikroperforationen werden hier Durchgangsöffnungen durch eine Substratschicht bzw. Öffnungen in einer Materialschicht angesehen, welche kanalartig die Substratschicht bzw. Materialschicht durchdringen und deren maximaler Kanaldurchmesser quer zur Längserstreckung des Kanals im Mikrometerbereich liegt, vorzugsweise kleiner 200 μm, bevorzugt kleiner 150 μm ist, am bevorzugtesten im Bereich zwischen 5 und 100 μm liegt.

Die Begriffe transparent oder transluzent und opak beziehen sich hier jeweils auf den Zustand, den ein Material nach dem Laminieren mit dem Hochtemperatur-Hochdruck-Laminationsverfahren annimmt. So sind beispielsweise Folien aus Polycarbonat, welche im fertigen Verbundkörper transparente Materialschichten bilden, häufig vor dem Laminieren aufgrund einer gewissen Oberflächenrauheit transluzent. Eine opake Substratschicht, welche beispielsweise ebenfalls auf Polycarbonatbasis hergestellt ist, kann beispielsweise über Zusätze von Titandioxid, so genanntes Titanweiß, opak ausgebildet sein.

Ein innenliegender Volumeneinschluss ist ein zusammenhängender abgeschlossener Volumenbereich in einem Verbundkörper, der keine Grenzfläche aufweist, die mit einer Außenfläche des Verbundkörpers zusammenfällt oder zusammentrifft. Ein Volumeneinschluss ist somit vollständig vom thermoplastischen Polymermaterial umschlossen, auf dessen Basis die Substratschichten hergestellt sind, aus denen der Verbundkörper gebildet ist.

Bevorzugte Ausführungsformen

Insbesondere wird ein Verfahren zum Herstellen eines Verbundkörpers aus mehreren Substratschichten vorgeschlagen, umfassend die Schritte: Bereitstellen mehrerer Substratschichten, Einbringen von Ausnehmungen und/oder Durchbrechungen in mindestens eine der mehreren Substratschichten, Verfüllen zumindest eines Teils der Ausnehmungen und/oder Durchbrechungen mit mindestens einem Füllmaterial, welches eine nicht nur optisch wahrnehmbare abweichende Eigenschaft gegenüber dem Material der mindestens einen der mehreren Substratschichten aufweist; Zusammenführen der mehreren Substratschichten zu einem Substratschichtenstapel, so dass eine oberste der zusammengeführten Substratschichten eine obere, äußere, von der oder den übrigen der mehreren Substratschichten abgewandte Oberseite ohne Ausnehmungen und/oder Durchbrechungen aufweist und eine unterste der zusammengeführten Substratschichten eine untere äußere, von der oder den übrigen der mehreren Substratschichten abgewandte Unterseite ohne Ausnehmungen und/oder Durchbrechungen aufweist, wobei vorgesehen ist, dass die mehreren Substratschichten auf Basis desselben thermoplastischen Polymermaterials hergestellt sind oder werden und die zusammengeführten Substratschichten in einem Hochtemperatur-Hochdruck-Laminationsverfahren zu einem monolithischen Verbund zusammengefügt werden. Die verfüllten Ausnehmungen und/oder Durchbrechungen bilden in dem monolithischen Verbund, der den Verbundkörper bildet, innenliegende Volumeneinschlüsse. Man erhält somit einen flachen Verbundkörper für ein Sicherheitsdokument, der eine Oberseite und eine Unterseite aufweist, die im Wesentlichen parallel zueinander orientiert sind, und wobei der Verbundkörper von der Ober- zu der Unterseite hin aus einer oder mehreren Materialschichten besteht, wobei die Materialschicht oder Materialschichten alle auf Basis desselben thermoplastischen Polymermaterials hergestellt sind und der Verbundkörper hinsichtlich der Polymerstruktur monolithisch ausgebildet ist und innenliegend Volumeneinschlüsse umfasst, die zumindest teilweise mit einem, vorzugsweise nicht gasförmigen, am bevorzugtesten festen, Füllmaterial verfüllt sind, wodurch eine nicht nur optisch wahrnehmbare Materialeigenschaft in zumindest einem Volumenbereich der die Volumeneinschlüsse umfassenden Materialschicht bewirkt ist. Es können auch unterschiedliche Füllmaterialien verwendet sein oder werden.

Vorteil der Erfindung ist es, dass ein Verbundkörper für ein Sicherheitsdokument geschaffen wird oder ist, der einen innenliegenden Volumenbereich umfasst, dessen Materialeigenschaften gegenüber dem Polymermaterial, aus dem der Verbundkörper geschaffen ist, über die Materialeigenschaften des Füllmaterials oder der Füllmaterialien modifiziert ist. Hierdurch wird eine Materialeigenschaft in dem Volumenbereich modifiziert, welche nicht für eine optische Verifikation vorgesehen ist. Hierdurch werden neuartige Sicherheitsmerkmale und -elemente möglich sowie die Möglichkeit geschaffen, andere bereits bekannte Sicherheitselemente zu verbessern und/oder zu modifizieren. Man erhält somit einen Verbundkörper mit mindestens einer innenliegenden Volumenschicht, die als Ganzes oder in mindestens einem Volumenbereich hinsichtlich ihrer nicht optischen Eigenschaften gegenüber den Materialeigenschaften des Materials modifiziert ist, auf dessen Basis die Volumenschicht, welche häufig eine Materialschicht ist, hergestellt ist.

Besonders bevorzugt wird das Laminationsverfahren so ausgeführt und die Ausnehmungen und Durchbrechungen so mit dem Füllmaterial verfüllt, dass die Oberseite und die Unterseite des Verbundkörpers zumindest im Bereich der innenliegenden Volumeneinschlüsse, welche sich in dem Verbundkörper aus den verfüllten Ausnehmungen und/oder Durchbrechungen gebildet haben, eben ausgebildet werden. Ein so hergestellter flacher Verbundkörper weist somit eine ebene Ober- und Unterseite zumindest in dem Bereich auf, in dem die innenliegenden Volumeneinschlüsse ausgebildet sind. Von außen kann anhand der Kontur somit nicht auf Positionen der eingebrachten Volumeneinschlüsse geschlossen werden. Eine Fälschung wird dadurch erschwert, dass die intrinsischen, innenliegenden Materialeigenschaften, die durch die in das Kunststoffmaterial eingebrachten Ausnehmungen und/oder Durchbrechungen, welche verfüllt sind und somit innenliegende Volumeneinschlüsse bilden, verändert sind, nicht auf einfache Weise erkannt werden können.

Besonders einfach lässt sich ein solcher Verbundkörper mit ebenen Oberflächen und/oder großen Volumenanteilen des Füllmaterials herstellen, indem beim Einbringen von Ausnehmungen und/oder Durchbrechungen in mindestens eine der mehreren Substratschichten in die mindestens eine der mehreren Substratschichten Durchbrechungen in Form von Mikroperforationen mittels einer Laserbestrahlung eingebracht werden. Mittels Laserablation lassen sich in Substratschichten aus thermoplastischem Polymermaterial zuverlässig Mikroperforationen einbringen. Hierfür kann das Material durch eine Licht-Material-Wechselwirkung ablatiert werden. Bei geeignet gewählten Betriebsparametern, die unter anderem von einer Materialstärke, der Substratschicht, dem Basispolymer, auf dessen Basis die Substratschicht hergestellt ist, einer verwendeten Laserwellenlänge abhängen, können entweder im Wesentlichen zylindrische oder konisch zulaufende Durchbrechungen ausgebildet werden. Die Querschnittsform kann jedoch im Wesentlichen beliebig variiert werden und elliptische, sternförmige oder kreisrunde Formen annehmen. Im Längsschnitt, d.h. parallel zur Durchdringungsrichtung, können rechteckige oder trapezförmige Querschnittsformen ausgebildet werden.

Bei einer Verwendung von Mikroperforationen ist es möglich, insgesamt einen hohen Volumenanteil an Füllmaterial in einen Substratschichtbereich einzubringen, ohne auch nur lokal die monolithische Polymerstruktur nennenswert zu schwächen. Eine erhöhte Delaminationsneigung tritt somit nicht auf.

Besonders bevorzugt werden Mikroperforationen mit einem Querschnittsdurchmesser kleiner 200 μm, bevorzugt im Bereich zwischen 5 und 100 μm verwendet. Die Abstände zwischen den Mittelpunkten der einzelnen Mikroperforationen werden vorzugsweise ebenfalls im μm-Bereich gewählt. Entsprechen die Abstände von Mittelpunkten gleichartig ausgeführter Mikroperforationen in einem auf Quadraten basierenden Raster, einem x-fachen eines maximalen Durchmessers der Querschnittsfläche der Mikroperforationen, so können für einen Wert von x mit x > 1 eine Volumenanteile bis zu

$$\frac{\pi}{4x^2}$$ Füllmaterial bezogen auf das Gesamtvolumen erreicht werden. Insgesamt sind so Volumenanteile an Füllmaterial in einer Volumenschicht des Verbundkörpers erreichbar, die theoretisch bei zylindrischer Mikroperforation bis zu etwa 78 % betragen können.

Da sich Durchbrechungen zuverlässiger verfüllen lassen als Ausnehmungen, die keine Durchbrechungen der Substratschicht sind, in welche diese eingebracht sind, werden vorzugsweise ausschließlich Durchbrechungen und besonders bevorzugt in Form von Mikroperforationen genutzt. Um dennoch eine Materialschicht an der Oberseite und der Unterseite des Verbundkörpers zu erhalten, in welcher keine von außen wahrnehmbaren verfüllten Volumenbereiche existieren, wird es bevorzugt, als die oberste Substratschicht und als die unterste Substratschicht jeweils eine Substratschicht beim Zusammenführen anzuordnen, in die zuvor keine Ausnehmungen oder Durchbrechungen eingebracht sind.

Da in der Regel das Füllmaterial, welches eine nicht optische Materialeigenschaft aufweist, die von der des Polymermaterials abweicht, aus dem die Materialschicht bzw. Substratschicht gebildet ist, in die das Füllmaterial eingebracht wird bzw. integriert ist, auch abweichende optische Eigenschaften aufweist, wird es bevorzugt, die innenliegende ausgebildete Materialschicht, in welcher die Volumeneinschlüsse ausgebildet werden, gegen eine optische Wahrnehmung durch die Oberseite und/oder die Unterseite des gebildeten Verbundkörpers zu schützen. Hierfür ist bei einer Ausführungsform vorgesehen, dass mindestens eine der mehreren Schichten opak ausgebildet ist oder flächig in einem Bereich mit einer opaken Drucklage versehen ist oder wird, vorzugsweise mindestens zwei der mehreren Substratschichten opak ausgebildet oder flächig in einem Bereich mit einer opaken Drucklage versehen sind oder werden und beim Zusammentragen so angeordnet wird oder werden, dass zumindest durch die Oberseite, vorzugsweise durch die Oberseite und die Unterseite, die mit dem Füllmaterial zumindest teilweise verfüllten Ausnehmungen und/oder Durchbrechungen nicht optisch wahrnehmbar sind. In dem fertigen Verbundkörper ist somit zwischen der Oberseite und den Volumeneinschlüssen und vorzugsweise ebenfalls zwischen der Unterseite und den Volumeneinschlüssen entweder jeweils eine opake Materialschicht angeordnet oder zumindest eine Drucklage vorgesehen, welche opak ist.

Die Veränderung der Materialeigenschaften in einem Volumenbereich kann beispielsweise vorteilhaft genutzt werden, um Eigenschaften einer eingebrachten und in den Verbundkörper integrierten elektronischen Schaltung vorteilhaft zu beeinflussen. Bei einer Ausführungsform ist daher vorgesehen, dass zwischen mindestens zwei der mehreren Substratschichten eine elektronische Struktur eingebracht und/oder ausgebildet wird oder ist, beispielsweise mittels eines Bedruckens einer Substratschichtoberfläche, dass diese beim Zusammenführen und Zusammenfügen in einer vorgegebenen räumlichen Anordnung zu den verfüllten Ausnehmungen und/oder Durchbrüchen in der mindestens einen der mehreren Substratschichten angeordnet wird und die elektronischen Eigenschaften der elektronischen Struktur durch das Füllmaterial in den verfüllten Volumeneinschlüssen in dem sich ergebenden Verbundkörper beeinflusst sind. Wird beispielsweise eine Antennenstruktur mittels einer eine leitfähige Drucklage bildenden Zubereitung auf eine der mehreren Substratschichtoberflächen aufgedruckt, so kann über eine Nutzung eines ferromagnetischen und/oder paramagnetischen Füllmaterials, das in eingebrachte Aussparungen oder Durchbrechungen verfüllt wird oder ist, eine Induktivität der Antenne deutlich verändert werden.

Bei einigen Ausführungsformen ist vorgesehen, dass durch ursprünglich getrennt eingebrachte Durchbrechungen, welche mit einem Füllmaterial verfüllt werden, eine zusammenhängende, sich zumindest in einer der Substratschichten auch lateral erstreckende Volumenstruktur ausgebildet wird. Bei einer Ausführungsform ist daher vorgesehen, dass zumindest ein Teil der Ausnehmungen und/oder Durchbrechungen in die mindestens eine der mehreren Substratschichten so eingebracht wird, dass diese zumindest an einer Oberfläche dieser Substratschicht voneinander getrennte Öffnungen aufweisen und somit als getrennte Ausnehmungen oder Durchbrechungen gebildet werden, und im Innern dieser Substratschicht jeweils mit einer anderen der Ausnehmungen oder Durchbrechungen verbunden sind, so dass das in diese Durchbrechungen verfüllte Füllmaterial zumindest eine gemeinsame lateral ausgedehnte einheitliche Volumenstruktur ausbildet. Es versteht sich, dass zusätzlich Ausnehmungen oder Durchbrechungen in dem mindestens einen Substrat ausgebildet sein können, die nicht mit anderen Durchbrechungen in Kontakt stehen. Beispielsweise kann eine solche dreidimensionale Struktur ausgebildet werden, indem die Durchbrechungen als zylinderartige Kanäle ausgebildet werden, deren Zylinderachsen unterschiedliche Orientierungen bezüglich einer Oberflächennormalen der mindestens einen Substratschicht aufweisen.

Bei einer anderen Ausführungsform ist vorgesehen, dass zusätzlich in die mindestens eine weitere der mehreren Substratschichten Ausnehmungen oder Durchbrechungen angepasst an die in die mindestens eine der mehreren Substratschichten eingebrachten Ausnehmungen oder Durchbrechungen eingebracht werden und beim Zusammenführen so angeordnet werden, dass das in die Durchbrechungen der mindestens einen und der mindestens einen weiteren der mehreren Substratschichten eingefüllte Füllmaterial zumindest eine gemeinsame lateral ausgedehnte einheitliche Volumenstruktur in der oder den Materialschichten des Verbundkörpers ausbilden, die aus dem Material der mindestens einen und der mindesten einen weiteren der mehreren Substratschichten gebildet wird. Über eine geschickte Anordnung der Durchbrechungen und/oder Ausnehmungen in den unterschiedlichen Substratschichten lateral in den jeweiligen Substratschichtebenen und bezüglich einer Schichtungsrichtung der Substratschichten in dem gebildeten Substratschichtenstapel ist es möglich, auch komplexere gemeinsame Volumenstrukturen aus dem Füllmaterial zu bilden und/oder auch allgemein Volumeneigenschaften dreidimensional über eine Höhe, die über eine Materialstärke einer der Substratschichten hinaus geht, innenliegend in dem geschaffenen Verbundkörper auszubilden.

Eine weitere vorteilhafte Ausführungsform sieht vor, dass die Ausnehmungen und/oder Durchbrechungen in der mindestens einen der mehreren Substratschichten nur in Teilbereiche eingebracht werden und mit einem Füllmaterial oder mehreren Füllmaterialien verfüllt werden, dessen oder deren Dichte von der des Basismaterials der Substratschicht verschieden ist, vorzugsweise um ein Vielfaches größer ist. Hierüber wird es möglich, über die sich ergebenden Volumeneinschlüsse ein Gewicht und/oder insbesondere einen Schwerpunkt des sich ergebenden flachen Verbundkörpers zu beeinflussen. Hierdurch wird es möglich, beispielsweise in den Verbundkörper integrierte Mikroprozessoren hinsichtlich ihrer auf einen Mittelpunkt des Sicherheitsdokuments bezogenen Schwerpunktverschiebung auszugleichen oder einen Schwerpunkt des sich ergebenden flachen Dokumentkörpers so zu beeinflussen, dass dieser deutlich beabstandet von dem erwarteten Schwerpunkt liegt, der sich für einen Dokumentkörper ergeben würde, bei dem der gesamte flache Verbundkörper aus ein und demselben Material gebildet wäre. Ferner kann auf diese Weise das Gewicht des sich ergebenden Verbundkörpers deutlich beeinflusst, beispielsweise erhöht, werden. Während beispielsweise Polycarbonate eine Dichte von etwa 1,2 g/cm$^3$ aufweisen, können andere Füllmaterialien eine Dichte im Bereich von etwa 2,25 g/cm$^3$ für Kohlenstoff über 5,1 g/cm$^3$ für Eisenoxid bis hin zu 19,3 g/cm$^3$ für Gold oder andere Schwermetalle aufweisen.

In dem oben berechneten theoretischen Grenzbeispiel erreicht der Volumenanteil des Füllmaterials in einer Volumenschicht des Verbundkörpers bei zylindrischen Mikroperforationen einen Wert von bis zu etwa 78 %. Das zusätzliche Gewicht Δm der Volumenschicht beträgt je nach verwendetem befüllenden Material bis zum 11-fachen des Gewichts m0 der ursprünglichen Substratschicht, die beispielsweise eine Folie ist. Es gilt: $\Delta m/m_0 = v(y-1)$; wobei v den Volumenanteil an Füllmaterial angibt und y eine Zahl ist, die dem Verhältnis der Dichte des Füllmaterials zu der Dichte des Grundmaterials der Substratschicht entspricht. Die Dichte des Füllmaterials beträgt in dem hier gegebenen Beispiel somit das y-fache der Dichte des Grundmaterials.

Die Merkmale des Verfahrens weisen dieselben Vorteile wie die entsprechenden Merkmale des erfindungsgemäßen Verbundkörpers auf, der durch das Verfahren gebildet wird.

Nachfolgend wird die Erfindung anhand bevorzugter Ausführungsbeispiele näher erläutert. Hierbei zeigen:

Fig. 1 Substratschichten vor einem Zusammenfügen zu einem Verbundkörper;

Fig. 2 den sich aus den Substratschichten nach Fig. 1 ergebenden Verbundkörper;

Fig. 3 eine schematische Schnittansicht eines weiteren Verbundkörpers;

Fig. 4 eine weitere schematische Schnittansicht durch einen weiteren Verbundkörper;

Fig. 5 eine schematische Schnittansicht durch einen Verbundkörper, in den eine elektronische Struktur integriert ist;

Fig. 6 eine andere Schnittansicht des Verbundkörpers nach Fig. 5;

Fig. 7 eine schematische Schnittansicht durch einen Verbundkörper, der unter Verwendung der Materialschicht nach Fig. 8 hergestellt ist;

Fig. 8 eine schematische Draufsicht auf eine Substratschicht, in die voneinander getrennt ausgebildete Mikrokanäle eingebracht sind, die jeweils mit anderen Mikrokanälen im Inneren in Verbindung stehen; und

Fig. 9 ein schematisches Ablaufdiagramm eines Verfahrens zum Herstellen eines Verbundkörpers.

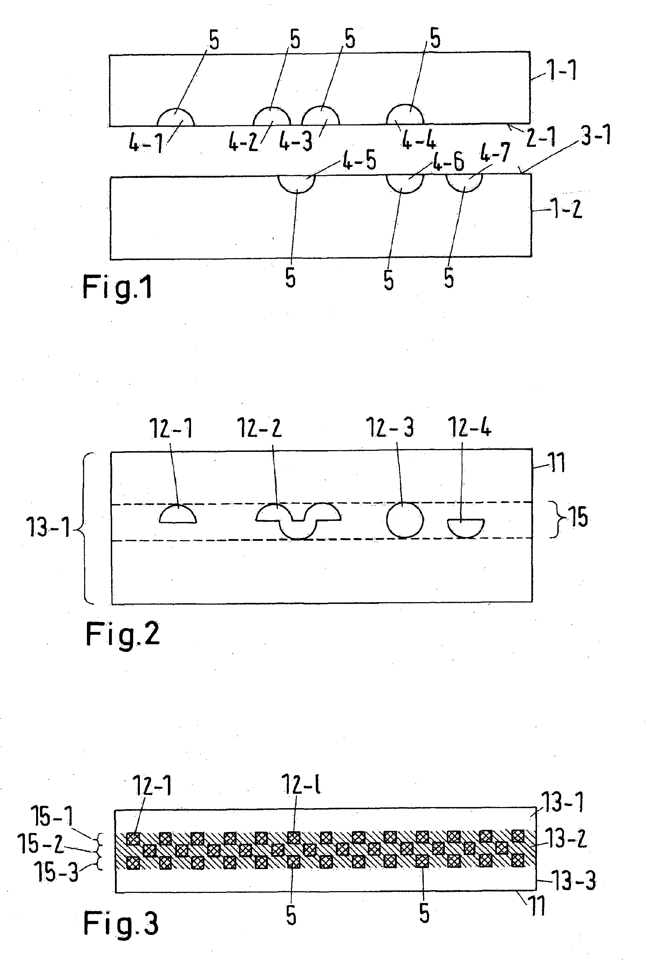

In Fig. 1 sind schematisch zwei Substratschichten 1-1, 1-2 im Querschnitt dargestellt. Die beiden Substratschichten 1-1, 1-2 sind beide auf Basis desselben thermoplastischen Polymermaterials, beispielsweise Polycarbonat, hergestellt. In die Polymermatrix sind Zusatzstoffe eingefügt, welche die Substratschichten opak ausbilden. Beispielsweise ist als Farbmittel Titanweiß beigefügt. In eine Unterseite 2-1 der Substratschicht 1-1 und eine Oberseite 3-2 der Substratschicht 1-2 sind Ausnehmungen 4-1 bis 4-7 eingebracht. Diese Ausnehmungen 4 werden beispielsweise mittels geeigneter Laserstrahlung in einem Laserablationsprozess in den Substratschichten 1-1, 1-2 ausgebildet. Hinsichtlich ihrer lateralen Anordnung sind die in die unterschiedlichen Substratschichten 1-1 und 1-2 eingebrachten Ausnehmungen 4 bei der dargestellten Ausführungsform zumindest teilweise aufeinander abgestimmt. Werden die beiden Substratschichten 1-1, 1-2 zusammengeführt, so dass die Unterseite 2-1 des Substrats 1-1 auf der Oberseite 3-2 des Substrats 1-2 angeordnet wird, so ergänzen sich einzelne der Ausnehmungen, welche mit einem Füllmaterial 5 verfüllt sind. Beispielsweise sind die Ausnehmungen 4-1 bis 4-7 alle mit demselben Füllmaterial 5 verfüllt. Das Verfüllen erfolgt beispielsweise mittels eines Einrakelns oder mittels eines Druckverfahrens, beispielsweise eines Tintenstrahldruckverfahrens, sofern das Füllmaterial flüssig ist oder mittels eines flüssigen Trägermaterials, welches gegebenenfalls flüchtig ist, aufgebracht werden kann. Als Füllmaterial kann beispielsweise ein leitfähiges Kunststoffmaterial und/oder auch ein mit Klebstoff versehenes Metallpulver oder Ähnliches verwendet werden. Das Füllmaterial 5 zeichnet sich dadurch aus, dass es eine nicht nur optisch wahrnehmbare Materialeigenschaft aufweist, die von der des Kunststoffmaterials, d.h. des Polymermaterials abweicht, aus dem die Substratschichten 1-1, 1-2 hergestellt sind.

Die verschiedenen Ausnehmungen 4 (4-1 bis 4-7) können auch mit unterschiedlichen Füllmaterialien verfüllt werden. Hierbei können auch unterschiedliche Verfahren eingesetzt werden.

Nachdem die Substratschichten wie oben erwähnt zusammengeführt sind, werden sie in einem Hochtemperatur-Hochdurck-Laminationsverfahren so zusammengefügt, dass sich ein monolithischer Verbundkörper 11 bildet. Dies bedeutet, dass an jener Stelle im Verbundkörper, an dem ursprünglich die Unterseite 2-1 der Substratschicht 1-1 und die Oberseite 3-2 der Substratschicht 1-2 beim Zusammenführen aufeinander stoßen, keine Phasengrenze in der Polymerstruktur des Verbundkörpers 11 zu erkennen ist, der in Fig. 2 schematisch im Querschnitt dargestellt ist.

Bei der dargestellten Ausführungsform ergeben sich aus den ursprünglichen Ausnehmungen 4-1 bis 4-7 Volumeneinschlüsse 12-1 bis 12-4. Gut zu erkennen ist, dass sich einzelne verfüllte Ausnehmungen so ergänzt haben, dass die korrespondierenden Volumeneinschlüsse zum Teil aus mehreren in den ursprünglich verschiedenen Substratschichten 1-1, 1-2 eingebrachten verfüllten Aussparungen gebildet sind. Beispielsweise ist aus den Aussparungen 4-2, 4-3, 4-5 der gemeinsame Volumeneinschluss 12-2 entstanden, welcher sich lateral in dem Verbundkörper, d.h. parallel zu einer Hauptoberfläche 14 des Verbundkörpers 11 erstreckt. Auch die ursprünglichen Aussparungen 4-4 und 4-6 ergänzen einander, um einen gemeinsamen Volumeneinschluss 12-3 in dem Verbundkörper 11 zu bilden. Im dargestellten Ausführungsbeispiel sind die Substratschichten opak ausgebildet, so dass auch der Verbundkörper 11, der daher aus einer einheitlichen Materialschicht 13-1 besteht, opak ausgebildet ist. Die im Innern befindlichen Volumeneinschlüsse 4, welche beispielsweise ein ferromagnetisches Material enthalten, so dass der Verbundkörper mit einem Magneten gehalten werden kann, verändern somit die Materialeigenschaft dieser einheitlichen Materialschicht 13. Hierbei handelt es sich um eine Materialeigenschaft, welche nicht optisch ist. Die Volumeneinschlüsse befinden sich alle in einer Volumenschicht 15 innerhalb der Materialschicht 13-1. Die Volumenschicht 15 ist über gepunktete Linien zur Veranschaulichung gekennzeichnet.

In Fig. 3 ist eine schematische Schnittdarstellung eines weiteren Verbundkörpers 11 dargestellt, der ursprünglich aus fünf Substratschichten gefertigt ist. Drei dieser Substratschichten sind mit Mikroperforationen mittels Laserstrahlung versehen worden, welche Durchbrechungen durch die entsprechenden Substratschichten darstellen. Die Mikroperforationen sind in die Substratschichten so eingebracht, dass diese nach dem Zusammenführen der Substratschichten lateral gegeneinander versetzt in dem sich bildenden Substratschichtenstapel angeordnet sind. Die einzelnen Mikroperforationen in den drei Substratschichten sind jeweils mit einem Füllmaterial verfüllt. Das Verfüllen erfolgt jeweils so, dass die einzelnen Mikroperforationen (Durchbrechungen) jeweils bündig mit einer Oberseite und einer Unterseite der Substratschicht verfüllt sind.

Um ein Verfüllen der Mikroperforation zu begünstigen, kann an einer Seite des Substrats ein Unterdruck erzeugt werden. Auch eine Anordnung auf einem saugfähigen Material, beispielsweise einem Vlies, kann ein Verfüllen begünstigen. Bei noch einer weiteren Verfüllvariante wird die Substratschicht mit einer Schutzfolie versehen und mit der Schutzfolie gemeinsam perforiert. Dann werden die Mikroperforationen verfüllt und anschließend die Schutzfolie entfernt. So wird die Oberfläche des Substrats beim Rakeln vor Beschädigung und Beschichtung mit dem zu verfüllenden Material geschützt.

Die drei mit den verfüllten Durchbrechungen ausgeführten Substratschichten sind zwischen zwei transparenten Substratschichten in dem Substratschichtenstapel angeordnet, der beim Zusammenführen der Substratschichten gebildet wird. Die beiden transparenten Substratschichten sind jeweils an einer Seite mit einer Drucklage bedruckt, welche aus einer Zubereitung hergestellt ist, welche auf Basis desselben Polymermaterials ausgebildet ist, auf dessen Basis alle Substratschichten hergestellt sind, die zusammengefügt werden. Von der oberen Substratschicht ist somit die innenliegende untere Oberfläche bedruckt und bei der untersten Substratschicht die obere Substratschichtoberfläche. Dadurch, dass die Drucklagen mit einer Zubereitung gedruckt sind, die auf Basis desselben Polymermaterials hergestellt ist wie die Substratschichten, bilden die Drucklagen keine eigenständigen Materialschichten, welche ein Ausbilden eines monolithischen Dokumentkörpers während des Hochtemperatur-Hochdruck-Laminationsverfahrens ausgebildet wird. Der in Fig. 3 dargestellte Verbundkörper 11 weist drei Materialschichten 13-1, 13-2, 13-3 auf, welche in jeweils aus einem im Wesentlichen homogenen Polymermaterial bestehen. Während die oberste und die unterste Materialschicht 13-1 und 13-3 aus transparentem Polymermaterial gebildet sind, ist die mittlere Materialschicht 13-2, welche aus den mit verfüllten Mikroperforationen gebildeten Substratschichten entstanden ist, aus einem opaken Polymermaterial gebildet. In dieser mittleren Materialschicht 13-2 befinden sich eine Vielzahl von Volumeneinschlüssen 12-I. Diese verändern die Materialeigenschaft der mittleren Materialschicht 13-2. Beispielsweise können die Volumeneinschlüsse 12-I ein Polymermaterial aufweisen, welches eine höhere Elastizität als das Polymermaterial der Materialschicht 13-2 aufweist. Hierüber wird beispielsweise eine mechanische Eigenschaft der Materialschicht 13-2 und somit des Verbundkörpers 11 gezielt verändert. Die ursprünglichen Substratschichten, aus denen die Materialschicht 13-2 entstanden ist, lassen sich aufgrund der geometrischen Anordnung der Volumeneinschlüsse 12-I mit drei Volumenschichten 15-1 bis 15-3 gedanklich assoziieren. Anhand der Polymerstruktur sind diese nicht zu erkennen und auch nicht gegenüber anderen gedanklichen Aufteilungen bevorzugt.

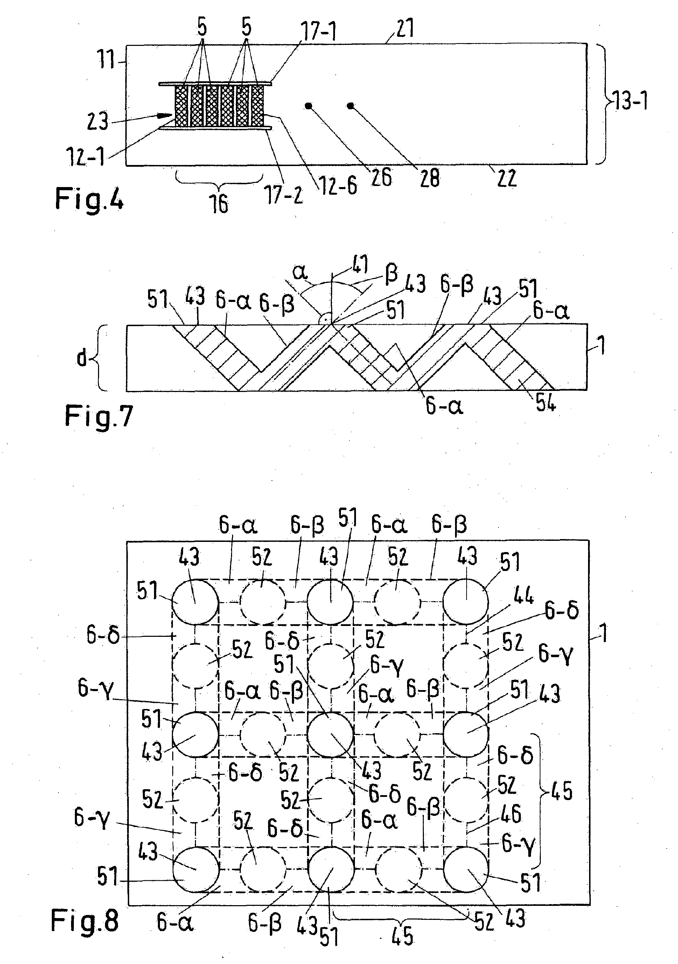

In Fig. 4 ist eine schematische Querschnittszeichnung eines weiteren Verbundkörpers 11 dargestellt. Dieser umfasst eine Materialschicht 13, welche aus ursprünglich drei transparenten Substratschichten hergestellt ist. Eine mittlere Substratschicht ist in einem flächigen Bereich 16 mit Mikroperforationen versehen, welche beispielsweise mit einem Füllmaterial 5 aus einem Polymer-Metallteilchen-Gemisch verfüllt sind. Dieses Gemisch weist eine wesentlich höhere Dichte als das Polymermaterial der Substratschichten auf, welche beispielsweise eine Dichte von etwa 1,2 g/cm$^3$ aufweisen, sofern diese aus Polycarbonat gefertigt sind. Die beiden transparenten Substratschichten, zwischen die die mit den verfüllten Mikroperforationen versehene Substratschicht angeordnet wird, sind in den zu dem Bereich 16, in dem die Mikroperforationen ausgebildet sind, korrespondierenden Bereichen an einer Unterseite bzw. einer Oberseite jeweils mit einer Drucklage bedruckt, welche beispielsweise ein farbiges, opakes Muster in Form ausbilden. Zum Aufbringen dieser Drucklagen 17-1, 17-2 wird eine Zubereitung auf Basis des Polymermaterials verwendet, auf Basis dessen die Substratschichten hergestellt sind. Nach dem Zusammenführen der Substratschichten werden bzw. sind diese in einem Hochtemperatur-Hochdruck-Laminationsverfahren zu dem monolithischen Verbundkörper 11 zusammengefügt, der nun eine Materialschicht 13-1 umfasst, in die die Drucklagen 17-1, 17-2 sowie in die Volumeneinschlüsse 12-I integriert sind. Bei der dargestellten Ausführungsform sind die Volumeneinschlüsse 12-I aufgrund der opak ausgebildeten Drucklagen 17-1, 17-2 durch die Oberseite 21 und die Unterseite 22 des Verbundkörpers 11 nicht optisch wahrnehmbar. Aufgrund der höheren Dichte des Füllmaterials 5 ist die Materialeigenschaft jedoch in einem Volumenbereich 23 lokal verändert. Insgesamt verschiebt sich somit ein Schwerpunkt 26 gegenüber einem durch die Symmetrie festgelegten Mittelpunkt 28 des Verbundkörpers 11, an dem man den Schwerpunkt erwarten würde, sofern der Verbundkörper 11 aus einem einheitlichen homogenen Material hergestellt wäre. Diese Verschiebung des Schwerpunkts 26 kann als Sicherheitsmerkmal genutzt werden und auf einfache Weise verifiziert werden, indem geprüft wird, ob der Verbundkörper bei einer Auflagerung, welche sich unterhalb eines Symmetriepunktes (beispielsweise dem Mittelpunkt 28) befindet, im Gleichgewicht befindet oder bei einer Auflagerung unterhalb des Schwerpunktes 26 im Gleichgewicht ist. Für eine Verifikation kann beispielsweise der Schwerpunkt 26 durch eine eingedruckte (nicht dargestellte) Markierung angegeben sein, so dass jener Punkt bekannt ist, an welchem der Verbundkörper aufzulagern ist, um die Verifikation durchzuführen.

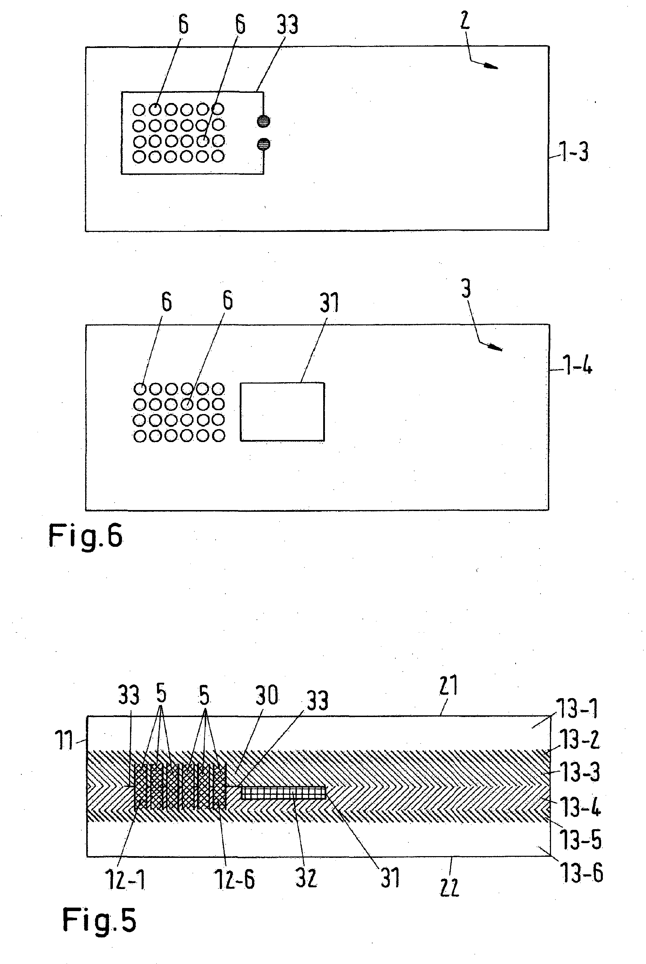

In Fig. 5 ist eine Schnittzeichnung durch einen Verbundkörper 11 dargestellt, in den eine elektronische Schaltung 30 integriert ist. Ursprünglich ist der dargestellte Verbundkörper 11 durch sechs Substratschichten hergestellt, von denen eine zweitoberste und eine zweitunterste opak ausgebildet sind. Die beiden mittleren Substratschichten sind im dargestellten Ausführungsbeispiel aus beispielsweise unterschiedlich gefärbten opaken Substratschichten hergestellt. In diese beiden Substratschichten sind aneinander angepasst Mikroperforationen in Form von Durchbrechungen eingebracht, die beispielsweise mit einem ferromagnetischen Füllmaterial verfüllt sind. Eine der beiden Substratschichten weist darüber hinaus eine Aussparung 31 auf, in die ein Mikroprozessor 32 eingefügt wird, beispielsweise beim Zusammentragen der einzelnen Substratschichten während des Zusammenführens. Ferner ist auf die eine Substratschichtoberfläche, welche im zusammengeführten Zustand dem Mikroprozessor zugewandt ist, mittels einer elektrisch leitfähigen Drucklage 17 einer Antennenstruktur 33 ausgebildet, die beim Laminieren einen Kontakt zu dem Mikroprozessor 32 ausbildet. In Fig. 5 ist der sich ergebende Verbundkörper 11 nach der Lamination dargestellt. Dieser umfasst im dargestellten Beispiel sechs Materialschichten 13-1 bis 13-6. Die oberste und unterste Materialschicht 13-1, 13-6 sind beispielsweise transparent ausgebildet. Die mittleren Materialschichten 13-3, 13-4, welche aufgrund ihrer unterschiedlichen Einfärbungen im Verbundkörper als getrennte Materialschichten 13-3, 13-4 zu erkennen sind, umschließen gemeinsam die als Antennenstruktur 33 ausgebildete elektronische Struktur. Die in diesen beiden Materialschichten 13-3 und 13-4 ausgebildeten Volumeneinschlüsse 12-I verändern eine Induktivität der Antennenstruktur 33 und beeinflussen somit dessen elektronische Eigenschaften. Da die Materialschichten 13-2 und 13-5, die die mittleren Materialschichten 13-3 und 13-4 umschließen, ebenfalls opak ausgebildet sind, sind weder die elektronische Struktur 30 noch der Mikroprozessor 32 oder die Volumeneinschlüsse 12-I durch die Oberseite 21 oder die Unterseite 22 des Verbundkörpers 11 zu beobachten. Da die Durchbrechungen in den Substratschichten, welche mit dem Füllmaterial verfüllt sind, als Mikrokanäle ausgebildet sind, ergibt sich eine ebene glatte Oberfläche des Verbundkörpers 11 selbst dann, wenn einzelne Mikrokanäle (Volumeneinschlüsse 12-I) nicht vollständig mit Füllmaterial 5 verfüllt sind.

Obwohl bei der Ausführungsform nach Fig. 5 zu jeder der verwendeten Substratschichten im fertigen Verbundkörper eine korrespondierende Materialschicht 13-1 bis 13-6 erkennbar ist, weist der Verbundkörper dennoch hinsichtlich der Polymerstruktur eine monolithische Struktur auf, d.h. dass in der Polymerstruktur kein Phasenübergang zwischen den verschiedenen Materialschichten 13-1 bis 13-6 zu erkennen ist. Die unterschiedlichen Materialschichten sind nur aufgrund unterschiedlicher Beifügungen zu dem Polymer voneinander zu unterscheiden.

In Fig. 6 ist eine Draufsicht auf die Oberseite 3 der zu der Materialschicht 13-4 korrespondierenden Substratschicht 1-4 und eine Draufsicht auf die Unterseite 2 der zu der Materialschicht 13-3 korrespondierenden Substratschicht 1-3 schematisch dargestellt. Gut zu erkennen sind die zueinander korrespondierenden Durchbrechungen 6, welche in die Substratschichten 1-3, 1-4 eingebracht und mit dem metallhaltigen Füllmaterial 5 verfüllt sind. Zusätzlich ist die Aussparung 31 zu erkennen, in die der Mikroprozessor 32 eingefügt wird. Auf der anderen Substratschicht ist zusätzlich die aufgedruckte Antennenstruktur 33 zu erkennen.

Während bei der Ausführungsform nach Fig. 4 der Schwerpunkt des Verbundkörpers gezielt von einem aufgrund einer Geometrie des Verbundkörpers erwarten Schwerpunkt, beispielsweise dem Mittelpunkt, wegbewegt ist, kann über ein Füllmaterial, welches eine abweichende Dichte von der des Grundmaterials einer Substratschicht aufweist, auch eine Kompensation einer Schwerpunktverschiebung erfolgen, die beispielsweise über einen in den Verbundkörper integrierten Mikroprozessor oder Ähnliches bewirkt ist. Eine Position eines Mikroprozessors und/oder ein Vorhandensein eines Mikroprozessors kann so "verdeckt" oder dessen Entdeckung aufgrund von Schwerpunktauswertungen erschwert oder unmöglich gemacht werden.

Anhand von Fig. 7 und 8 soll exemplarisch erläutert werden, wie auch lateral ausgedehnte Strukturen aus einzelnen getrennt ausgebildeten Durchbrechungen in einer Substratschicht gebildet werden können.

In Fig. 7 ist eine Schnittansicht durch eine Substratschicht 1 dargestellt. In die Substratschicht 1 sind mehrere als Kanäle ausgebildete Durchbrechungen 6-$\alpha$, 6-$\beta$ eingebracht. Die mit dem Bezugszeichen 6-$\alpha$ gekennzeichneten Durchbrechungen sind beispielsweise durch Einstrahlung von Laserstrahlung unter einem Raumwinkel α bezüglich der Oberflächennormalen 42 der Substratschicht 1 in diese eingebracht. Die Durchbrechungen 6-β sind hingegen unter einem abweichenden Winkel β gegenüber der Oberflächennormale mittels Laserstrahlung erzeugt. Hierbei sind die einzelnen Durchbrechungen 6-α, 6-β so ausgeführt, dass diese im Innern der Substratschicht miteinander verbunden sind. Die Winkel α und β sind hierbei jeweils als Raumwinkel aufzufassen. Diese umfassen einen Polarwinkelanteil gemessen gegen die Oberflächennormale und einen Azimutalanteil gemessen in der Ebene der Oberseite 3 der Substratschicht 1. Bei der dargestellten Ausführungsform sind die Orte 43, an denen in der Oberseite 3 der Substratschicht 1 Durchbrechungen eingebracht werden, in einem regelmäßigen quadratischen Raster 44 angeordnet.

Dies lässt sich am einfachsten an Fig. 8 erkennen, in der eine schematische Draufsicht auf die Substratschicht 1 nach Fig. 7 dargestellt ist. Die Orte 43, an denen in die Oberseite kanalartige Durchbrechungen 6 eingebracht werden, sind als volle Kreise dargestellt. In der dargestellten Ausführungsform sind diese Orte 43 in einem Raster 44 angeordnet, welches ein quadratisches Grundmuster aufweist. Eine Kantenlänge 45 der Basisquadrate 46 des Musters 44 entspricht einer doppelten Materialstärke d (vergleiche Fig. 7) der Substratschicht 1. Werden an jedem dieser Orte 43 unter vier Raumwinkeln Mikrokanäle ausgebildet, wobei die vier Richtungen alle denselben Polarwinkel von 45° gegenüber der Oberflächennormale und die Azimutalwinkel 0°, 90°, 180°, 270° aufweisen, so ergibt sich ein geschlossenes Muster, bei dem sämtliche Kanäle jeweils mit den übrigen Kanälen in Verbindung stehen, sofern ein ausreichender Kanaldurchmesser ausgewählt ist. Wird beispielsweise eine typische Substratschichtstärke d von beispielsweise 100 μm gewählt und werden Mikrokanäle mit einem kreisförmigen Querschnitt mit einem Durchmesser von beispielsweise 50 μm ausgebildet, so gibt es im Innern der Struktur im Bereich der Eintritts- bzw. Austrittsöffnungen 51, 52 der Durchbrechungen 6 einen gemeinsamen Volumenbereich 53 der unterschiedlichen Durchbrechungen 6-α, 6-β, 6-γ, 6-δ, so dass sich nach dem Verfüllen der Durchbrechungen 6 mit einem Füllmaterial 5 eine lateral ausgedehnte einheitliche Struktur 54 als Volumeneinschluss in den fertigen Verbundkörper bildet.

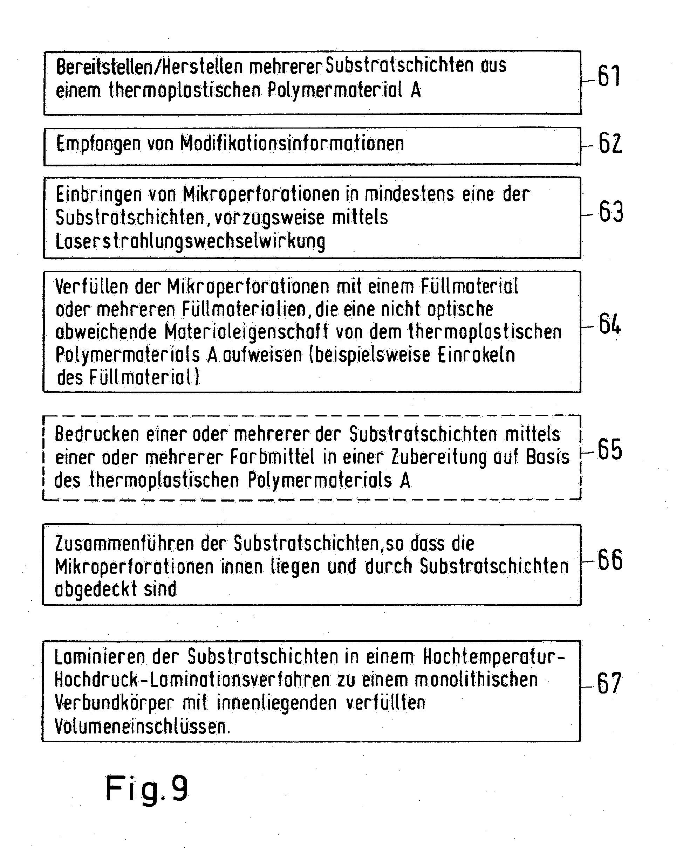

In Fig. 9 ist schematisch ein Ablaufdiagramm dargestellt, anhand dessen eine Ausführungsform eines Verfahrensablaufs noch einmal erläutert wird. Zunächst werden mehrere Substratschichten aus einem thermoplastischen Polymermaterial, welches hier mit A bezeichnet wird, bereitgestellt oder hergestellt 61. Ferner werden Modifikationsinformationen empfangen 62, welche festlegen, wie mindestens eine der Substratschichten hinsichtlich ihrer Materialeigenschaften modifiziert werden soll. Gemäß den Modifikationsinformationen werden in einem weiteren Schritt in mindestens eine der mehreren Substratschichten, vorzugsweise mittels Laserstrahlungswechselwirkung, Mikroperforationen eingebracht 63. Anschließend werden die Mikroperforationen mit einem Füllmaterial oder unterschiedlichen Füllmaterialien verfüllt, das oder die mindestens eine nicht optische abweichende Materialeigenschaft zu dem Material der mindestens einen Substratschicht aufweisen.

Gegebenenfalls, wie über die gestrichelte Darstellung angedeutet ist, werden eine oder mehrere der Substratschichten mittels Farbmitteln einer Zubereitung auf Basis des thermoplastischen Polymermaterials A bedruckt 65. Anschließend werden die mehreren Substratschichten zusammengeführt, so dass die mindestens eine, mit den verfüllten Mikroperforationen versehene Substratschicht eine innenliegende Substratschicht ist 66. Abschließend werden die Substratschichten in einem Hochtemperatur-Hochdruck-Laminationsverfahren zu einem monolithischen Verbundkörper mit innenliegenden Volumeneinschlüssen des/der Füllmaterials/Füllmaterialien laminiert 67.

Die Angaben, welche optische Eigenschaften der Materialschichten (Substratschichten) angeben, sind im Hinblick auf die Ausbildung der veränderten Volumeneigenschaft, die als oder zum Ausbilden eines Sicherheitsmerkmals verwendet wird, nicht von Bedeutung, außer für die Tatsache, dass die Volumeneinschlüsse gegebenenfalls vor einer Wahrnehmbarkeit durch die Oberflächen des Verbundkörpers geschützt werden. Die gewählten optischen Eigenschaften der Materialschichten der verschiedenen Ausführungsbeispiele sind nur zu Veranschaulichungszwecken, außer zum Zwecke des Verdeckens der Volumeneinschlüsse, in einzelnen Ausführungsformen unterschiedlich gewählt, so dass in dem Verbundkörper im Querschnitt trotz der monolithischen Polymerstruktur einzelne Materialschichten erkennbar sind, die einzelnen oder mehreren Substratschichten zuordenbar sind, aus denen sie entstanden sind.

Es versteht sich für den Fachmann, dass zusätzliche weitere Sicherheitsmerkmale und Elemente in den Verbundkörper eingefügt werden können oder der Verbundkörper mit weiteren Sicherheitsmerkmalen oder -elementen in ein fertiges Sicherheitsdokument integriert werden kann.

Die beschriebenen Ausführungsformen stellen lediglich beispielhafte Ausführungen dar. Die in den verschiedenen Ausführungsbeispielen beschriebenen Merkmale können miteinander kombiniert werden, um die Erfindung umzusetzen.

Bezugszeichenliste

| 1, 1-i | Substratschicht |
|---|---|
| 2, 2-i | Unterseite (der Substratschicht i) |
| 3, 3-i | Oberseite (der Substratschicht i) |
| 4, 4-k | Ausnehmungen |
| 5 | Füllmaterial |
| 6 | Durchbrechungen |
| 11 | Verbundkörper |

| | |
|---|---|
| 12, 12-l | Volumeneinschlüsse |
| 13, 13-i | Materialschicht |
| 14 | Hauptoberfläche |
| 15 | Volumenschicht |
| 16 | Bereich |
| 17 | Drucklage |
| 21 | Oberseite (Verbundkörper) |
| 22 | Unterseite (Verbundkörper) |
| 23 | Volumenbereich |
| 26 | Schwerpunkt |
| 28 | Mittelpunkt |
| 30 | elektronische Schaltung |
| 31 | Aussparung |
| 32 | Mikroprozessor |
| 33 | Antennenstruktur |
| 42 | Oberflächennormale (Substrat) |
| 43 | Orte |
| 44 | Raster |
| 45 | Kantenlänge |
| 46 | Basisquadrat |
| 51 | Eintrittsöffnung (Durchbrechung) |
| 52 | Austrittsöffnung (Durchbrechung) |
| 53 | gemeinsamer Volumenbereich |
| 54 | einheitliche Struktur |
| d | Materialstärke (Substrat) |
| 61 - 67 | Verfahrensschitte |

**Patentansprüche**

1. Verfahren zum Herstellen eines Verbundkörpers (11) aus mehreren Substratschichten (1), so dass der sich ergebende Verbundkörper (11) mindestens eine innenliegende Materialschicht umfasst, die in mindestens einem Volumenbereich hinsichtlich ihrer nichtoptischen Eigenschaften gegenüber den Materialeigenschaften des Materials modifiziert ist, auf dessen Basis die Substratschichten (1) hergestellt sind, umfassend die Schritte:

   Bereitstellen mehrerer Substratschichten (1);
   Einbringen von Ausnehmungen und/oder Durchbrechungen in mindestens eine der mehreren Substratschichten (1);
   Verfüllen zumindest eines Teils der Ausnehmungen (4) und/oder Durchbrechungen (6) mit einem Füllmaterial (5), welches eine nicht nur optisch wahrnehmbare abweichende Eigenschaft gegenüber dem Material der mindestens einen der mehreren Substratschichten (1) aufweist;
   Zusammenführen der mehreren Substratschichten (1) zu einem Substratschichtenstapel, so dass eine oberste der zusammengeführten Substratschichten (1) eine obere äußere, von der oder den übrigen der mehreren Substratschichten (1) abgewandte Oberseite ohne Ausnehmungen und/oder Durchbrechungen aufweist und eine unterste der zusammengeführten Substratschichten (1) eine untere äußere, von der oder den übrigen der mehreren Substratschichten abgewandte Unterseite ohne Ausnehmungen und/oder Durchbrechungen aufweist;
   **dadurch gekennzeichnet, dass**
   die mehreren Substratschichten (1) auf Basis desselben thermoplastischen Polymermaterials hergestellt sind oder werden und die zusammengeführten Substratschichten (1) in einem Hochtemperatur-Hochdruck-Laminationsverfahren zu einem monolithischen Verbund zusammengefügt werden.

2. Verfahren nach Anspruch 1, **dadurch gekennzeichnet, dass** beim Einbringen von Ausnehmungen (4) und/oder Durchbrechungen (6) in die mindestens eine der mehreren Substratschichten (1) Durchbrechungen (6) in Form von Mikroperforationen mittels einer Laserbestrahlung erzeugt werden.

3. Verfahren nach Anspruch 1 oder 2, **dadurch gekennzeichnet, dass** als die oberste Substratschicht (1-1) und als die unterste Substratschicht (1-6) jeweils eine Substratschicht beim Zusammenführen angeordnet werden, in die zuvor keine Ausnehmungen (4) und/oder Durchbrechungen (6) eingebracht sind.

4. Verfahren nach einem der vorangehenden Ansprüche, **dadurch gekennzeichnet, dass** zwischen mindestens zwei der mehreren Substratschichten (1) eine elektronische Struktur (30) eingebracht und/oder ausgebildet wird, beispielsweise mittels eines Bedruckens einer der Substratschichtoberflächen, dass diese beim Zusammenführen und Zusammenfügen in einer vorgegebenen räumlichen Anordnung zu den verfüllten Ausnehmungen (4) und/oder Durchbrüchen (6) in der mindestens einen der mehreren Substratschichten (1) angeordnet wird, sodass die elektronischen Eigenschaften der elektronischen Struktur (30) durch das Füllmaterial (5) in den verfüllten Volumeneinschlüssen (12) in dem sich ergebenden Verbundkörper (11) beeinflusst sind.

5. Verfahren nach einem der vorangehenden Ansprüche, **dadurch gekennzeichnet, dass** mindestens eine der mehreren Schichten (1-2, 1-1) opak ausgebildet ist oder flächig in einem Bereich mit einer opaken Drucklage (17-1) versehen ist und beim Zusammenführen so angeordnet wird, dass zumindest durch die Oberseite (21) des sich ergebenden Verbundkörpers (11) die mit dem Füllmaterial (5) zumindest teilweise verfüllten Ausnehmungen (4) und/oder Durchbrechungen (6) nicht optisch wahrnehmbar sind und vorzugsweise mindestens eine zweite der mehreren Substratschichten (1-5) opak ausgebildet ist oder flächig in einem Bereich mit einer opaken Drucklage (17-2) versehen oder wird und beim Zusammenführen so angeordnet wird, dass die mit dem Füllmaterial (5) zumindest teilweise verfüllten Ausnehmungen (4) und/oder Durchbrechungen (6) auch nicht durch die Unterseite (22) des sich ergebenden Verbundkörpers optisch wahrnehmbar sind.

6. Verfahren nach einem der vorangehenden Ansprüche, **dadurch gekennzeichnet, dass** zumindest ein Teil der Ausnehmungen (4) und/oder Durchbrechungen (6) in die mindestens eine der mehreren Substratschichten (1) so eingebracht werden, dass diese zumindest an einer Oberfläche dieser Substratschicht voneinander getrennte Öffnungen (51, 52) aufweisen und im Inneren dieser Substratschicht (1) jeweils mit mindestens einer anderen der Ausnehmungen (4) und/oder Durchbrechungen (6) verbunden sind, sodass das in diese Durchbrechungen (6) verfüllte Füllmaterial (5) zumindest eine gemeinsame lateral ausgedehnte einheitliche Volumenstruktur (54) ausbildet.

7. Verfahren nach einem der vorangehenden Ansprüche, **dadurch gekennzeichnet, dass** zusätzlich in die mindestens eine weitere der mehreren Substratschichten (1) Ausnehmungen (4) und/oder Durchbrechungen (6), angepasst an die in die mindestens eine der mehreren Substratschichten (1) eingebrachten Ausnehmungen (4) und/oder Durchbrechungen (6), eingebracht werden, und beim Zusammenführen so angeordnet werden, dass das in die Ausnehmungen (4) und/oder Durchbrechungen (6) der mindestens einen und der mindestens einen weiteren Substratschichten (1) eingefüllte Füllmaterial (5) zumindest eine gemeinsame lateral ausgedehnte einheitliche Volumenstruktur (54) in der oder den Materialschichten des Verbundkörpers ausbilden, die aus dem Material der mindestens einen und der mindestens einen weiteren der mehreren Substratschichten (1) gebildet wird oder werden.

8. Flacher Verbundkörper (11) für Sicherheitsdokumente mit einem innenliegenden Sicherheitsmerkmal, der eine Oberseite (17) und eine Unterscheite (18) aufweist, die im Wesentlichen parallel zueinander orientiert sind, und wobei der Verbundkörper (11) von der Oberseite (17) zur Unterseite (18) hin aus einer Materialschicht (13) oder mehreren Materialschichten (13) besteht,
**dadurch gekennzeichnet, dass**
die eine Materialschicht oder die mehreren Materialschichten (13) alle auf Basis desselben thermoplastischen Polymermaterials hergestellt sind und der Verbundkörper (11) hinsichtlich der Polymerstruktur monolithisch ausgebildet ist und die Materialschicht oder mindestens eine innenliegende der Materialschichten (13) Volumeneinschlüsse (12) umfasst, die zumindest teilweise mit mindestens einem oder mehreren, vorzugsweise nicht gasförmigen, am bevorzugtesten festen, Füllmaterial (5) oder Füllmaterialien (5) verfüllt sind, wodurch eine nicht nur optisch wahrnehmbare Materialeigenschaft in zumindest einem Volumenbereich der die Volumeneinschlüsse (12) umfassenden Materialschicht (13) bewirkt ist.

9. Flacher Verbundkörper (11) nach Anspruch 8, **dadurch gekennzeichnet, dass** die Oberseite (21) und die Unterseite (22) zumindest in einem Bereich (16), in dem die innenliegenden Volumeneinschlüsse (12) ausgebildet sind, eben sind.

10. Flacher Verbundkörper (11) nach Anspruch 8 oder 9, **dadurch gekennzeichnet, dass** zwischen der Oberseite (21) und den Volumeneinschlüssen (12) eine opake Materialschicht (13-2) und/oder flächig ausgedehnte Drucklage (17-1) ausgebildet sind, so dass die Volumeneinschlüsse (12) durch die Oberseite (21) nicht optisch wahrnehmbar sind.

11. Flacher Verbundkörper (11) nach einem der Ansprüche 8 bis 10, **dadurch gekennzeichnet, dass** aus dem Füllmaterial (5) mindestens eine dreidimensionale sich laterale erstreckende Struktur (54) ausgebildet ist, die aus miteinander in Verbindung stehenden gleichartigen oder ähnlichartigen Volumeneinschlüssen (12) gebildet ist

12. Flacher Verbundkörper (11) nach einem der Ansprüche 8 bis 11, **dadurch gekennzeichnet, dass** in dem Inneren des Verbundkörpers (11) eine elektronische Struktur (30) eingeschlossen ist, welche vorzugsweise mindestens eine Leiterbahn umfasst, wobei mindestens eine elektronische Eigenschaft der elektronischen Struktur (30) durch das in den Volumeneinschlüssen (12) befindliche Füllmaterial (5) oder die Füllmaterialien (5) beeinflusst ist.

13. Flacher Verbundkörper (11) nach einem der Ansprüche 8 bis 12, **dadurch gekennzeichnet, dass** die Ausnehmungen (4) und/oder Durchbrechungen (6) in der mindestens einen der mehreren Substratschichten (1) nur in Teilbereichen eingebracht und mit einem Füllmaterial (5) verfüllt sind, dessen Dichte von der des Basismaterials der Substratschicht verschieden ist, vorzugsweise um eine vielfaches größer ist.

**Claims**

1. Method for producing a composite body (11) composed of a plurality of substrate layers (1), so that the resulting composite body (11) comprises at least one inner material layer which, in at least one volume area, is modified in terms of its non-optical properties in comparison to the material properties of the material on the basis of which the substrate layers (1) are produced, comprising the steps of:

providing a plurality of substrate layers (1);
introducing recesses and/or through-holes in at least one of the plurality of substrate layers (1);
filling at least some of the recesses (4) and/or through-holes (6) with a filling material (5) which has a property that differs, in a manner that is perceptible not simply optically, from the material of the at least one of the plurality of substrate layers (1);
bringing together the plurality of substrate layers (1) to form a substrate layer stack in such a way that a topmost of the substrate layers (1) that have been brought together has an upper outer top side that faces away from the rest of the plurality of substrate layers (1) and that has no recesses and/or through-holes, and a bottommost of the substrate layers that have been brought together has a lower outer bottom side that faces away from the rest of the plurality of substrate layers and that has no recesses and/or through-holes;
**characterised in that**
the plurality of substrate layers (1) are produced on the basis of the same thermoplastic polymer material and the substrate layers (1) that have been brought together are joined in a high-temperature, high-pressure lamination process to form a monolithic composite.

2. Method according to claim 1, **characterised in that**, when introducing recesses (4) and/or through-holes (6) into the at least one of the plurality of substrate layers (1), through-holes (6) in the form of microperforations are produced by means of laser irradiation.

3. Method according to claim 1 or 2, **characterised in that**, at the time of bringing together, a substrate layer in which no recesses (4) and/or through-holes (6) have been formed previously is arranged in each case as the topmost substrate layer (1-1) and as the bottommost substrate layer (1-6).

4. Method according to any one of the preceding claims, **characterised in that** an electronic structure (30) is introduced and/or formed between at least two of the plurality of substrate layers (1), for example by means of printing one of the substrate layer surfaces, **in that** said electronic structure, at the time of bringing together and joining, is arranged in a predefined spatial arrangement relative to the filled recesses (4) and/or through-holes (6) in the at least one of the plurality of substrate layers (1) so that the electronic properties of the electronic structure (30) are influenced by the filling material (5) in the filled volume inclusions (12) in the resulting composite body (11).

5. Method according to any one of the preceding claims, **characterised in that** at least one of the plurality of layers (1-2, 1-1) is opaque or is provided flat in a region having an opaque printed layer (17-1) and, at the time of bringing together, is arranged such that the recesses (4) and/or through-holes (6) that are at least partially filled with the filling material (5) are not optically perceptible at least through the top side (21) of the resulting composite body (11) and preferably at least a second of the plurality of substrate layers (1-5) is opaque or is provided flat in a region having an opaque printed layer (17-2) and, at the time of bringing together, is arranged such that the recesses (4) and/or through-holes (6) that are at least partially filled with the filling material (5) are also not optically perceptible through the bottom side (22) of the resulting composite body.

6. Method according to any one of the preceding claims, **characterised in that** at least some of the recesses (4) and/or through-holes (6) are introduced into the at least one of the plurality of substrate layers (1) in such a way that they have separate openings (51, 52) at least on a surface of this substrate layer and, in the interior of this substrate layer (1), are each connected to at least one other of the recesses (4) and/or through-holes (6) so that the filling material (5) that is filled into these through-holes (6) forms at least one common, laterally extending, uniform volume structure (54).

7. Method according to any one of the preceding claims, **characterised in that** recesses (4) and/or through-holes (6), adapted to the recesses (4) and/or through-holes (6) introduced into the at least one of the plurality of substrate layers (1), are additionally introduced into the at least one other of the plurality of substrate layers (1) and, at the time of bringing together, are arranged such that the filling material (5) that is filled into the recesses (4) and/or through-holes (6) of the at least one and of the at least one other substrate layers (1) forms at least one common, laterally extending, uniform volume structure (54) in the material layer(s) of the composite body, said volume structure(s) being formed of the material of the at least one and of the at least one other of the plurality of substrate layers (1).

8. Flat composite body (11) for security documents having an internal security feature, said composite body having a top side (17) and a bottom side (18) which are oriented essentially parallel to one another, and wherein the composite body (11), from the top side (17) to the bottom side (18), consists of one material layer (13) or of a plurality of material layers (13),

**characterised in that**

the one material layer or the plurality of material layers (13) are all produced on the basis of the same thermoplastic polymer material and the composite body (11) is monolithic in terms of the polymer structure, and the material layer or at least one inner material layer of the material layers (13) comprises volume inclusions (12) which are at least partially filled with at least one or several, preferably non-gaseous, most preferably solid, filling material (5) or filling materials (5), as a result of which a material property that is perceptible not simply optically is brought about in at least one volume area of the material layer (13) comprising the volume inclusions (12).

9. Flat composite body (11) according to claim 8, **characterised in that** the top side (21) and the bottom side (22) are planar at least in an area (16) in which the inner volume inclusions (12) are formed.

10. Flat composite body (11) according to claim 8 or 9, **characterised in that** an opaque material layer (13-2) and/or a flat printed layer (17-1) is formed between the top side (21) and the volume inclusions (12) so that the volume inclusions (12) are not optically perceptible through the top side (21).

11. Flat composite body (11) according to any one of claims 8 to 10, **characterised in that** at least one three-dimensional, laterally extending structure (54) is formed from the filling material (5), said structure being formed of identical or similar volume inclusions (12) that are connected to one another.

12. Flat composite body (11) according to any one of claims 8 to 11, **characterised in that** enclosed in the interior of the composite body (11) is an electronic structure (30) which preferably comprises at least one conductor track, wherein at least one electronic property of the electronic structure (30) is influenced by the filling material (5) or filling materials (5) located in the volume inclusions (12).

13. Flat composite body (11) according to any of claims 8 to 12, **characterised in that** the recesses (4) and/or through-holes (6) in the at least one of the plurality of substrate layers (1) are introduced only in sub-areas and are filled with a filling material (5), the density of which differs from, preferably is a multiple greater than, that of the base material of the substrate layer.

## Revendications

1. Procédé de production d'un corps composite (11) constitué de plusieurs couches substrats (1) de sorte que le corps composite obtenu (11) comprend au moins une couche de matériau intérieur qui est modifiée dans au moins une plage volumique eu égard à ses propriétés non optiques par rapport aux propriétés de matériau du matériau, sur la base duquel les couches substrats (1) sont produites, comprenant l'étape de :

préparation de plusieurs couches substrats (1) ;
insertion d'évidements et/ou d'ouvertures dans au moins l'une des multiples couches substrats (1) ;
remplissage d'au moins une partie des évidements (4) et/ou des ouvertures (6) avec un matériau de remplissage (5) qui présente une propriété divergente, perceptible non uniquement de façon optique, par rapport au matériau d'au moins l'une des multiples couches substrats (1) ;
réunion des multiples couches substrats (1) en un empilement de couches substrats, de sorte qu'une couche la plus au dessus des couches substrats réunies (1) présente un côté externe supérieur détourné de la ou des autres multiples couches substrats (1) sans évidements et/ou ouvertures et une couche la plus inférieure des couches substrats réunies (1) présente un côté inférieur externe détourné de la ou des autres multiples couches substrats sans évidements et/ou ouvertures ;
**caractérisé en ce que**
les multiples couches substrats (1) sont produites à base du même matériau polymère thermoplastique et les couches substrats réunies (1) sont réunies dans un procédé de stratification à haute température et haute pression en un composite monolithique.

2. Procédé selon la revendication 1, **caractérisé en ce que** lors de l'insertion d'évidements (4) et/ou d'ouvertures (6) dans au moins l'une des multiples couches substrats (1), des ouvertures (6) sont créées sous la forme de microperforations au moyen d'un rayon laser.

3. Procédé selon la revendication 1 ou 2, **caractérisé en ce que** comme couche substrat la plus supérieure (1-1) et comme couche substrat la plus inférieure (1-6), une couche substrat est disposée respectivement lors de la réunion, dans laquelle aucun évidement (4) et/ou aucune ouverture (6) n'est inséré(e) précédemment.

4. Procédé selon l'une des revendications précédentes, **caractérisé en ce qu'**entre au moins deux des multiples couches substrats (1), une structure électronique (30) est insérée et/ou formée, par exemple au moyen d'une impression de l'une des surfaces de couches substrats, de sorte que celle-ci est disposée, lors de la réunion et de la fusion dans un arrangement spatialement donné par rapport aux évidements (4) et/ou ouvertures (6) rempli(e)s, dans l'au moins une des multiples couches substrats (1) de sorte que les propriétés électroniques de la structure électronique (30) sont influencées par le matériau de remplissage (5) dans les inclusions volumiques remplies (12) dans le corps composite obtenu (11).

5. Procédé selon l'une des revendications précédentes, **caractérisé en ce qu'**au moins l'une des multiples couches (1-2, 1-1) est conçue de façon opaque ou est dotée sur la surface d'une zone, d'une impression opaque (17-1) et lors de la réunion, est disposée de telle sorte qu'au moins au travers du côté supérieur (21) du corps composite obtenu (11), les évidements (4) et/ou les couvertures (6) remplies au moins partiellement avec le matériau de remplissage (5) ne sont pas perceptibles optiquement et de préférence au moins une deuxième des multiples couches substrats (1-5) est conçue de façon opaque ou est dotée sur la surface d'une zone, d'une impression opaque (17-2) et lors de la réunion, est disposée de telle sorte que les évidements (4) et/ou les couvertures (6) remplies au moins partiellement avec le matériau de remplissage (5) ne sont pas perceptibles optiquement également au travers du côté inférieur (22) du corps composite obtenu.

6. Procédé selon l'une des revendications précédentes, **caractérisé en ce qu'**au moins une partie des évidements (4) et/ou ouvertures (6) sont intégré(e)s dans l'au moins une des multiples couches substrats (1) de sorte que celles-ci présentent au moins sur une surface de cette couche substrat, des ouvertures séparées (51, 52) et sont reliées à l'intérieur de cette couche substrat (1) respectivement à au moins un(e) autre des évidements (4) et/ou ouvertures (6) de sorte que le matériau de remplissage (5) remplissant ces ouvertures (6) forme au moins une structure volumique (54) unitaire commune étendue latéralement.

7. Procédé selon l'une des revendications précédentes, **caractérisé en ce qu'**en outre dans l'au moins une autre des multiples couches substrats (1), des évidements (4) et/ou des ouvertures (6) adaptées aux évidements (4) et/ou ouvertures (6) inséré(e)s dans l'au moins une des multiples couches substrats (1) sont inséré(e)s et lors de la réunion, sont disposé(e)s de telle sorte que le matériau de remplissage (5) dans les évidements (4) et/ou les ouvertures (6) de l'au moins une et de l'au moins une autre couches substrats (1) forme au moins une structure volumique (54) unitaire commune étendue latéralement dans la ou les couches de matériau du corps composite qui est/sont formée(s) du matériau d'au moins l'une ou d'au moins une autre des multiples couches substrats (1).

8. Corps composite plat (11) pour des documents de sécurité comportant une caractéristique de sécurité intérieure qui présente un côté supérieur (17) et un côté inférieur (18) qui sont orientés essentiellement parallèlement l'un par rapport à l'autre et dans lequel le corps composite (11) consiste du côté supérieur (17) au côté inférieur (18) en une couche de matériau (13) ou plusieurs couches de matériau (13), **caractérisé en ce que**
la couche de matériau ou les multiples couches de matériau (13) sont toutes produites sur la base du même matériau polymère thermoplastique et le corps composite (11) est formé de façon monolithique eu égard à la structure polymère et comprend la couche de matériau ou au moins une inclusion volumique (12) à l'intérieur des couches de matériau (13) qui sont remplies au moins partiellement par au moins un ou plusieurs matériau(x) de remplissage (5), de préférence non sous forme gazeuse, de manière préférée entre toutes, sous forme solide, ce qui donne une propriété de matériau perceptible non uniquement sur le plan optique dans au moins une plage volumique de la couche de matériau (13) comprenant l'inclusion volumique (12).

9. Corps composite plat (11) selon la revendication 8, **caractérisé en ce que** le côté supérieur (21) et le côté inférieur (22) sont plats dans au moins une zone (16) dans laquelle les inclusions volumiques intérieures (12) sont formées.

10. Corps composite plat (11) selon la revendication 8 ou 9, **caractérisé en ce qu'**entre le côté supérieur (21) et les inclusions volumiques (12) sont formées une couche de matériau opaque (13-2) et/ou une impression étendue en surface (17-1) de sorte que les inclusions volumiques (12) ne sont pas perceptibles optiquement au travers du côté supérieur.

11. Corps composite plat (11) selon l'une des revendications 8 à 10, **caractérisé en ce qu'**à partir du matériau de remplissage (5), est formée au moins une structure (54) tridimensionnelle s'étendant latéralement, qui est formée d'inclusions volumiques (12) identiques ou similaires en relation les unes avec les autres.

12. Corps composite plat (11) selon l'une des revendications 8 à 11, **caractérisé en ce que**, à l'intérieur du corps composite (11) est intégrée une structure électronique (30) qui comprend de préférence au moins une piste conductrice, dans lequel au moins une propriété électronique de la structure électronique (30) est influencée par le matériau de remplissage (5) ou les matériaux de remplissage (5) se trouvant dans les inclusions volumiques (12).

13. Corps composite plat (11) selon l'une des revendications 8 à 12, **caractérisé en ce que** les évidements (4) et/ou les ouvertures (6) sont intégré(e)s dans au moins une des multiples couches substrats (1) uniquement dans des zones partielles et sont remplies d'un matériau de remplissage (5) dont la densité est différente de celle du matériau de base de la couche substrat, de préférence, est beaucoup plus élevée.

Fig.1

Fig.2

Fig.3

**Fig.4**

**Fig.7**

**Fig.8**

## Fig.6

## Fig.5

Bereitstellen/Herstellen mehrerer Substratschichten aus einem thermoplastischen Polymermaterial A —61

Empfangen von Modifikationsinformationen —62

Einbringen von Mikroperforationen in mindestens eine der Substratschichten, vorzugsweise mittels Laserstrahlungswechselwirkung —63

Verfüllen der Mikroperforationen mit einem Füllmaterial oder mehreren Füllmaterialien, die eine nicht optische abweichende Materialeigenschaft von dem thermoplastischen Polymermaterials A aufweisen (beispielsweise Einrakeln des Füllmaterial) —64

Bedrucken einer oder mehrerer der Substratschichten mittels einer oder mehrerer Farbmittel in einer Zubereitung auf Basis des thermoplastischen Polymermaterials A —65

Zusammenführen der Substratschichten, so dass die Mikroperforationen innen liegen und durch Substratschichten abgedeckt sind —66

Laminieren der Substratschichten in einem Hochtemperatur-Hochdruck-Laminationsverfahren zu einem monolithischen Verbundkörper mit innenliegenden verfüllten Volumeneinschlüssen. —67

# Fig.9

**IN DER BESCHREIBUNG AUFGEFÜHRTE DOKUMENTE**

**In der Beschreibung aufgeführte Patentdokumente**

- DE 102008053582 B3
- DE 19934434 A1